# EUROPEAN PATENT APPLICATION

(11) **EP 1 205 847 A1**
(43) Date of publication of application: **15.05.2002**
(21) Application number: 00122988.9
(22) Date of filing: 23.10.2000
(51) Int. Cl.: G06F 9/46, H04H 1/00, H04L 29/06, H04Q 7/38

(54) **Resource conflict resolution**

(71) Applicant: Sony International (Europe) GmbH, 10785 Berlin (DE)
(72) Inventor: Müller, Gil, Advanced Technology Center Stuttgart, 70327 Stuttgart (DE); Schäfer, Ralf, Advanced Tech. Center Stuttgart, 70327 Stuttgart (DE)
(74) Representative: Müller . Hoffmann & Partner Patentanwälte

(57) **Abstract**

Mobile clients (5, 6, 7) may use a remote host (3) providing shareable resources for using the Internet, broadcast systems, or the like. When different mobile clients (5, 6, 7) are concurrently using the same host (3), resource conflicts may arise. A centralized method for resolving those resource conflicts is proposed which is characterized by negotiating between the different mobile clients (5, 6, 7) about future rights of allocating the available shareable resources.

## Description

The invention relates to a centralized method for resolving resource conflicts occurring when shareable resources which are at least partially allocated by at least one resource using client are requested by a resource demanding client, and an apparatus to perform said method.

In the field of information technology, it is known to share computational resources or memory resources between different resource using clients in order to avoid resource overheads in the resource using clients. A central computing device may for example provide computational resources for running several simulation programs as resource using clients which are started and controlled by user terminals connected to said central computing device. Another example is a host which provides resources for operations of resource using clients to use the Internet, cellular networks (e. g. GSM (global system for mobile communication)) or broadcast systems (e. g. DAB (digital audio broadcasting) or DVB (digital video broadcasting)). In the case that a resource demanding client wants to use the Internet, for example, the host allocates a part of the shareable resources needed for the resource demanding client to use the Internet, and provides this part of the shareable resources to the resource demanding client. When the resource demanding client finished operating on the Internet, the host frees the allocated resources in order to provide them to other resource demanding clients.

Another example are "mobile" resource using software clients which are capable of moving between different hosts in order to enable a flexible use of resources distributed over different hosts. The mobile resource using software clients may for example use DAB resources of the respective host to perform DAB tasks like downloading "all purpose data" via DAB.

When different resource using clients are concurrently active on the same host, however, resource conflicts may arise. That is, if all available resources have already been allocated for different resource using clients, no resources can be provided to an additional resource demanding client. For example, if all Internet access resources of an ISP (Internet Service Provider) are already occupied by Internet-using resource using clients, there is no chance for an additional resource demanding client to get access to the Internet.

To solve such conflicts, usually priority rights are assigned to the resource using clients which may be determined by a user of the resource using client, respectively. Document EP 0 915 592 A1 discloses, for example, a method for admitting new connections based on usage priority in a multiple access system for communication networks which defines at least two user priority classes and disconnects a user of a lower priority class in case a collision is caused by the user of a higher priority class.

Further, document EP 0 579 305 A2 shows a method for resolving conflicts between communication systems in absence of a central arbiter, which method defines that the holder of a token has the priority in case of a collision and has to return the token after termination of its operation.

Another example for resolving resource conflicts may be just to preempt some resource using clients from the shareable resources they are using and to provide the preempted resources to a new resource demanding client.

It is an object of the present invention to provide a flexible method for resolving resource conflicts which is capable of taking into account changing resource demands resulting from a dynamically changing number of resource using clients or from changing resource demands of the resource using clients itself.

To solve this object, the present invention provides a centralized method for resolving resource conflicts occurring when shareable resources which are at least partially allocated by at least one resource using client are requested by a resource demanding client, which is characterized by negotiating with said at least one resource using client and said resource demanding client about future rights of allocating said requested shareable resources.

Further, the present invention provides a host providing shareable resources for performing specific client applications which are assignable to resource using clients being connected to said host, respectively, which is characterized by
- an extracting means for extracting client status information of a resource using client,
- processing means being connected to said extracting means for processing said extracted client status information,
- providing means being connected to said extracting and said processing means for providing said shareable resources to a resource demanding client and/or to a client operation assigned to said resource demanding client, wherein said shareable resources providing process is initiatable or refusable by said processing means according to said extracted client status information.

Preferred embodiments of this method and host which are defined in independent claims 1 and 13, respectively, are respectively defined in the respective following dependent claims.

An important aspect of the present invention is that the resource conflict resolution is based on a negotiating process between the resource using clients and the resource demanding client which is controlled by a centralized unit, for example a host. An advantage thereof is that resource using client specific knowledge can be used to resolve such conflicts. If a resource using client, for example, allocates resources which are, however, not needed at the moment, it may be useful to deallocate the corresponding allocated resources for a certain period of time, and then returning it back to the resource using client at a time when the resource is actually needed.

If a resource demanding client, for example a mobile application tries to start a client operation on the central unit, the central unit is responsible for allocating shareable resources needed for said client operation. The central unit also cares for deallocation of the shareable resources, when said client operation has been finished. A shareable resource can be understood as a facility or a device on the central unit which is used during the execution of the client operation and is only usable by a limited number of resource using clients.

If shareable resources needed for a client operation can not be allocated, the central unit initiates a resource conflict resolution process. If the resource conflict can not be solved by the resource conflict resolution process, a failure of performing the client operation may be indicated to the corresponding resource demanding client. If the resource conflict can be solved by the resource conflict resolution process, the client operation is performed on the central unit, which may be indicated to the resource demanding client. However, the resource conflict resolution process is not restricted to one single central unit. The central unit providing the functionality for handling the resource conflict resolution process may, if it is connected to other central units, also use shareable resources of the other central units to solve the resource conflict resolution process. For example, the central unit may send a mobile resource demanding client to another host which still has unused shareable resources, if no shareable resources are available on the central unit at the moment. The controlling of the resource conflict resolution process, however, is preferably done by only one single central unit.

To initiate and perform the resource conflict resolution process, the central unit may contact at least one resource using client and determine a respective client status, which comprises all information needed for the central unit to handle a resource conflict, e. g. to judge whether it is suitable to deallocate the allocated shareable resources assigned to the respective resource using clients or to terminate corresponding client operations. To determine the respective client status, the central unit may contact a user of the resource using client for supplying priority information, or directly contact the resource using client. For example, the central unit may ask the user if it he insists on performing the client operation or if he is willing to terminate it. The central unit may, for example, directly ask the resource using client if the user has used the resource using client during the last ten minutes. If not, the central unit may decide to deallocate the corresponding shareable resources.

As described above, the central unit may only contact resource using clients when a resource conflict occurs. However, it is also possible that the central unit contacts the resource using clients or at least some of it in regular time intervals in order to regularly update the respective client status information. This extracted client status information may be stored within the central unit so that an immediate handling of a resource conflict without contacting the resource using clients is possible when a resource demanding client requires allocated shareable resources and therefore initiates a resource conflict. In another embodiment, the resource using clients are obliged to send in regular time intervals respective client status information to the central unit in order to indicate the importance of maintaining the respective allocation of shareable resources.

In a preferred embodiment, relationship information between the shareable resources allocated by the resource using clients and client operations assigned to the allocated resources of the resource using clients are tracked and stored within the central unit. The advantage thereof is that the central unit is enabled to negotiate "operation oriented", i. e. to ask the resource using client about terminating its client operation, which is easier to decide by the user or the client application as to decide about deallocating allocated shareable resources, which may not be definite in case that a resource using client runs several operations on the central unit. In other words, the central unit is capable to find out which client operation of which resource using client has to be terminated in order to deallocate a requested allocated resource according to the stored relationship information.

As the central unit manages the complete resource conflict resolution itself, it is possible to relieve a resource demanding client from the burden to manage such a resource conflict resolution on its own, which would require to implement approprate functionality in each resource using/demanding client. In the present invention, however, the negotiating functionality for resolving the resource conflict needs to be implemented only in the central unit. The resource using/demanding clients only have to comprise functionality for providing negatiation information (i. e. the client status) to the central unit.

In the case that a resource using client refuses or is not able to participate a negotiating process with the resource demanding client managed by the central unit, the central unit preferably handles this situation according to a configurable default reaction mechanism. For example, the central unit preempts the resource using client from its allocated shareable resources after a predetermined period of time (time out), if the resource using client does not respond to an asking process for determining the respective resource using client status initiated by the central unit. The default reaction mechanism may be set for each resource using client by a respective user and may therefore be different for different resource using clients, it may, however, also be centrally set by a manufacturer of the central unit and therefore be equal for all resource using clients. The central unit may also simply refuse the request of the resource demanding client in such a case.

Further features and advantages of a preferred embodiment according to the present invention will be explained below in conjunction with the accompanying drawings, in which
**Fig. 1** shows a schematic drawing of a resource management process according to the present invention;
**Fig. 2** shows a schematic drawing of a preferred embodiment of a resource conflict resolution process according to the present invention.

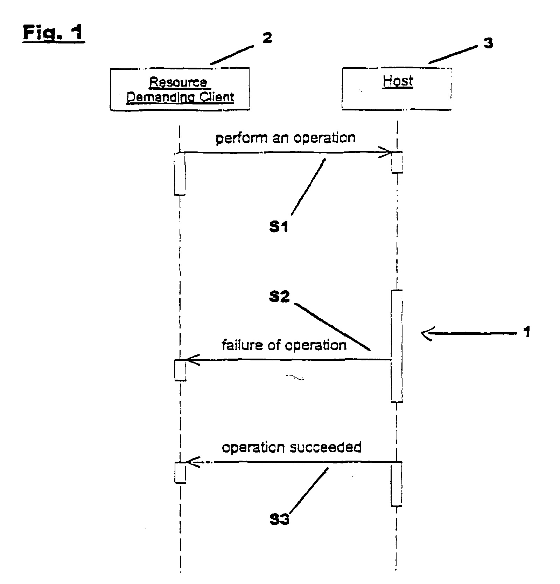

In the following description, making reference to Fig. 1, a preferred embodiment of a resource management process will be explained.

In a resource allocation process 1, a resource demanding client 2 tries to start a client operation on a host 3 in a first step S1. The host 3 tries to allocate shareable resources in order to perform the client operation of the resource demanding client 2. If the allocation of shareable resources is not possible because of a resource conflict occurrance, the host 3 tries to resolve the resource conflict. If it is not possible to solve the resource conflict, the host 3 indicates in a second step S2 the failure of the client operation to the resource demanding client 2. If the resource conflict can be solved, the resource allocation is retried and the execution of the client operation continues as normal. After having successfully performed the client operation, the host 3 indicates this to the resource demanding client 2 in a third step S3.

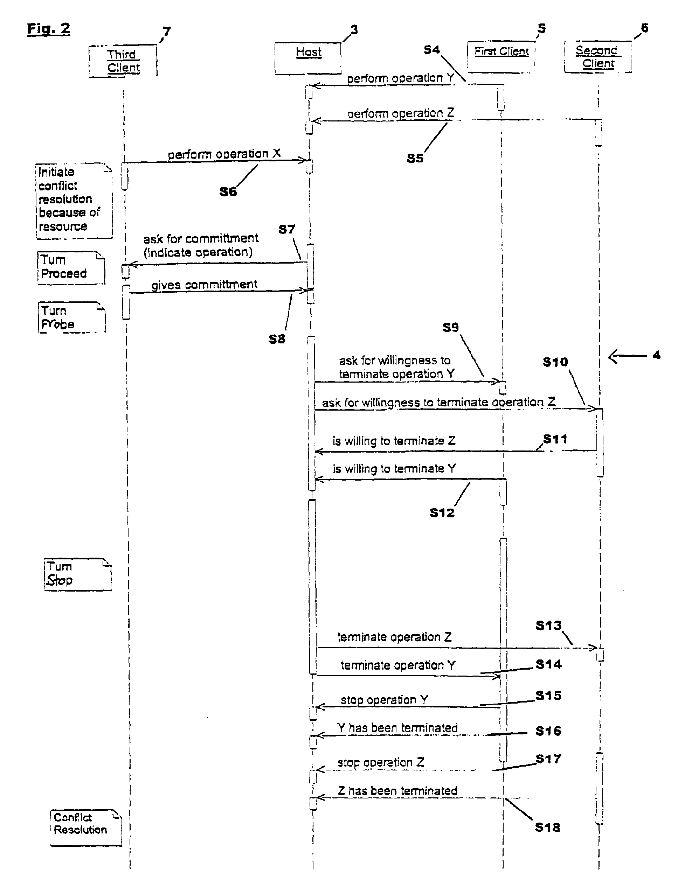

In the following description, making reference to Fig. 2, a preferred embodiment of a resource conflict resolution process will be described.

Generally, in this embodiment, a resource conflict resolution process preferably comprises four turns. In the first turn ("turn proceed"), the resource demanding client is asked, if it insists on his request for running a client operation (resource request) despite of a resource conflict occurrance. If the resource demanding client insists on his request, in a second turn ("turn probe") all other resource using clients which use shareable resources needed by the resource demanding client are asked "to be willing to" terminate corresponding client operations allocating the requested shareable resources, which is equivalent to asking the resource using clients to release their allocated resources needed by the resource demanding client. Preferably, if there is at least one resource using client which refuses to terminate a corresponding client operation, or which does not respond during the asking process of the host, the resource conflict resolution process fails. If all resource using clients agree to terminate the corresponding client operations, then, in a third turn ("turn stop"), they are instructed by the host to release their allocated resources by terminating their client operations. When all resource using clients have released their allocated resources, the client operation of the resource demanding client continues to operate. If there are some resource using clients which did not release their allocated resources in the third turn, then these resource using clients may be preempted from their allocated resources in a fourth turn ("turn preempt").

The present invention, however, is not restricted to this order of turns in the example given above, and any suitable combination of turns may be used.

In a resource conflict resolution process 4, a first client 5 starts to perform a client operation Y on a host 3 in a first step S4. Then, in a second step S5, a second client 6 starts to perform a client operation Z on the host 3. In a third step S6, a third client 7 tries to start a client operation X on the host 3. However, as the operation X needs shareable resources needed by client operations Y and Z, a resource conflict occurs. Therefore, the host 3 initiates a resource conflict resolution process and asks the third client 7 in a fourth step S7 for committment. The third client 7 gives its committment in a fifth step S8 to the host 3. Then, the host 3 asks in a sixth step S9 the first client 5 to terminate the client operation Y, and in a seventh step S10 for the willingness of the second client 6 to terminate the client operation Z. Then, the second client 6 gives its willingness to terminate the client operation Z in an eighth step S11 to the host 3. Further, the first client 5 gives its willingness to terminate the client operation Y in a ninth step S12 to the host 3. Then, in a tenth step S13, the host 3 instructs the second client 6 to terminate the client operation Z. Further, the host 3 instructs the first client 5 to terminate the client operation Y in an eleventh step S14. The first client 5 indicates in a twelfth step S15 to terminate the client operation Y, and in a thirteenth step S16, that the client operation Y has been stopped. Then, in a fourteenth step S17, the second client 6 indicates to the host 3 that the client operation Z will be terminated. Finally, in a fifteenth step S18, the second client 6 indicates the host 3 that the client operation Z has been terminated. Then, the client operation X of the third client 7 can be continued.

Apart from involving resource using clients in a negotiating process underlying the resource conflict resolution process, the resource conflict resolution process provided by the present invention has the advantages that a client operation programmer does not have to care about shareable resources, as the negotiation process is preferably performed "client operation oriented" and is completely managed by the host 3. Thus, the client operation programmer does only have to care about "client operation questions", the corresponding resource management is handled by the host 3. Second, a manufacturer of the host 3 can decide to which amount he likes to support resource management and resource conflict resolution. This means that it is possible to offer only a partial implementation of the resource conflict resolution process, i. e. only a part of the above described four turns may be implemented. For example, only the first turn of asking the resource demanding client if it insists on his request for running a client operation despite of a resource conflict occurrance may be implemented on the host 3. Likewise, the second turn of asking the resource using clients if they "are willing to" terminate corresponding client operations allocating the requested shareable resources may be left.

## Claims

1. Centralized method for resolving resource conflicts occuring when shareable resources which are at least partially allocated by at least one resource using client (5, 6) are requested by a resource demanding client (7), **characterized by** negotiating with said at least one resource using client (5, 6) and said resource demanding client (7) about future rights of allocating said requested shareable resources.

2. Method according to claim 1, **characterized by** tracking and/or storing relationship information between said shareable resources allocated by said resource using client (5, 6) and client operations of said resource using client (5, 6) using said allocated shareable resources.

3. Method according to claim 1 or 2, **characterized in that** said negotiating process is based upon a determining process of a client status of said resource using client (5, 6).

4. Method according to claim 3, **characterized by** asking the resource using client (5, 6) or a user of said resource using client (5, 6) about releasing at least a part of its allocated shareable resources and/or about terminating said client operations using said allocated shareable resources to determine said client status of said resource using client (5, 6), said asking process being performed on the basis of said tracked and/or stored relationship information.

5. Method according to claim 4, **characterized by** refusing to provide shareable resources to said resource demanding client if said resource using client (5, 6) refuses to release its allocated shareable resources and/or if said resource using client (5, 6) refuses to terminate said client operations using said allocated shareable resources.

6. Method according to claim 4, **characterized by** instructing said resource using client (5, 6) to release its allocated shareable resources and/or to terminate said client operations using said allocated shareable resources if said resource using client (5, 6) accepts to release its allocated shareable resources and/or if said resource using client (5, 6) accepts to terminate said client operations using said allocated shareable resources.

7. Method according to anyone of the preceding claims, **characterized by** asking said resource demanding client (7) whether insisting on a shareable resources demand.

8. Method according to anyone of the claims 1 to 5 and 7, **characterized by** acting according to a configurable default reaction mechanism if said resource using client (5, 6) refuses to participate said negotiating process, refuses to act according to results of said negotiating process or is not capable of participating said negotiating process.

9. Method according to claim 8, **characterized by** preempting said resource using client (5, 6) from its allocated shareable resources as a default reaction mechanism.

10. Method according to claim 8, **characterized by** terminating said client operations using said allocated shareable resources as a default reaction mechanism.

11. Method according to anyone of the claims 6, 9 or 10, **characterized by** providing said deallocated shareable resources of said resource using client to said resource demanding client.

12. Method according to anyone of the preceding claims, **characterized in that** said negotiating process, said step of determining said client status of said resource using client (5, 6) and said step of providing said shareable resources to said resource demanding client (7) are coordinated by a central unit (3) having access to said shareable resources.

13. Host (3) providing shareable resources for performing specific client operations, which are assignable to resource using clients (5, 6) being connected to said host (3), respectively, **characterized by**
- an extracting means for extracting client status information of a resource using client (5, 6),
- processing means being connected to said extracting means for processing said extracted client status information,
- providing means being connected to said extracting means and said processing means for providing said shareable resources to a resource demanding client (7) and/or to a client operation assigned to said resource demanding client (7), wherein said shareable resources providing process is initiatable or refusable by said processing means according to said extracted client status information.
